(19) Europäisches Patentamt
European Patent Office
Office européen des brevets

(11) **EP 4 438 220 A1**

(12) **EUROPEAN PATENT APPLICATION**
published in accordance with Art. 153(4) EPC

(43) Date of publication:
**02.10.2024 Bulletin 2024/40**

(21) Application number: **22925045.1**

(22) Date of filing: **27.12.2022**

(51) International Patent Classification (IPC):
*B23K 26/34* (2014.01)   *B33Y 10/00* (2015.01)
*B33Y 30/00* (2015.01)   *B33Y 50/02* (2015.01)
*B23K 9/032* (2006.01)   *B23K 9/04* (2006.01)
*B23K 9/12* (2006.01)   *B22F 10/00* (2021.01)
*B22F 10/85* (2021.01)

(52) Cooperative Patent Classification (CPC):
**B22F 10/00; B22F 10/85; B23K 9/032; B23K 9/04;
B23K 9/12; B23K 26/34; B33Y 10/00; B33Y 30/00;
B33Y 50/02**

(86) International application number:
**PCT/JP2022/048295**

(87) International publication number:
**WO 2023/149143 (10.08.2023 Gazette 2023/32)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **04.02.2022 JP 2022016344**

(71) Applicant: **KABUSHIKI KAISHA KOBE SEIKO SHO
(KOBE STEEL, LTD.)**
**Hyogo 651-8585 (JP)**

(72) Inventors:
• **CHIKAGUCHI, Satoshi**
  **Kobe shi, Hyogo 651-2271 (JP)**
• **HUANG, Shuo**
  **Kobe shi, Hyogo 651-2271 (JP)**

(74) Representative: **TBK**
**Bavariaring 4-6**
**80336 München (DE)**

(54) **CONTROL INFORMATION GENERATION DEVICE, CONTROL INFORMATION GENERATION METHOD, PROGRAM, WELDING CONTROL DEVICE, AND WELDING DEVICE**

(57) A control information generation device includes: a coordinate information acquisition unit configured to acquire coordinate information on a plurality of passing points in a path; a movement amount calculation unit configured to set a repulsion force applied to adjacent passing points among the passing points, and obtain, when the set repulsion force is applied to the passing point, a movement amount of the passing point from a position before the repulsion force is applied to a position where the passing point is in dynamic equilibrium by calculation for the plurality of passing points; a path update unit configured to update the path by correcting coordinates of the plurality of passing points according to the movement amount; and a control information output unit configured to output information on the updated path.

FIG. 2

**Description**

TECHNICAL FIELD

The present invention relates to a control information generation device, a control information generation method, a program, a welding control device, and a welding device.

BACKGROUND ART

In recent years, there has been an increasing need for depositing using a 3D printer as a production unit, and research and development have been advanced toward practical use of depositing using a slab metal material. The 3D printer that deposits slab metal materials uses heat sources such as lasers, electron beams, and arcs to melt metal powder or metal wires and deposits the molten metals to manufacture a deposited object.

In such a depositing technique, Patent Literature 1 discloses an additive manufacturing device that deposits a three-dimensional shape by depositing a molten processing material. The additive manufacturing device deposits layer shapes by melting the processing material and arranging beads on a processing target surface while moving a processing position along a depositing path indicated by control information, and deposits a three-dimensional shape by depositing these layer shapes. At the time of depositing, a correction width of a bead width is obtained based on the depositing path and a reference width of a bead cross section, and the bead is formed along a correction path based on the correction width, thereby preventing deterioration of depositing quality due to overlap of beads.

CITATION LIST

PATENT LITERATURE

Patent Literature 1: JP6647480B

SUMMARY OF INVENTION

TECHNICAL PROBLEM

A depositing path for forming a deposited object having a desired shape is implemented by arranging a plurality of paths in parallel in various patterns. However, as a shape of the deposited object is complicated, a relatively sparse portion and a relatively dense portion are generated in the arranged paths. When layers are deposited in this state, bead heights become uneven or a non-welded portion occurs inside. Therefore, it is desirable to make an arrangement of the paths as uniform as possible.

However, in a procedure of correcting the depositing path described in Patent Literature 1, since the bead width is changed, a bead formation condition (a welding condition in depositing molten wires) during deposition is changed and calculation is complicated, and as a result, control may be complicated. There is a case where a section in which the bead width greatly changes is generated even in the same path. Such a sudden change in conditions during depositing may lead to instability of a welding process itself. This is not limited to additive manufacturing, and a similar problem occurs in general fillet welding, butt welding, and the like.

Therefore, an object of the present invention is to provide a control information generation device, a control information generation method, a program, a welding control device, and a welding device capable of stably forming beads by making an arrangement of paths uniform without executing complicated control.

SOLUTION TO PROBLEM

The present invention has the following configuration.

(1) A control information generation device for generating control information for controlling a welding device that deposits a layer shape using a bead formed by adding a molten processing material to a processing target surface while moving a processing position along a predetermined path, and deposits a three-dimensional structure in which the layer shapes are deposited, the control information generation device including:

a coordinate information acquisition unit configured to acquire coordinate information on a plurality of passing points in the path;
a movement amount calculation unit configured to set a repulsion force applied to adjacent passing points among the plurality of passing points, and obtain, when the set repulsion force is applied to the passing point, a movement amount of the passing point from a position before the repulsion force is applied to a position where the passing point is in dynamic equilibrium by calculation for the plurality of passing points;
a path update unit configured to update the path by correcting coordinates of the plurality of passing points according to the movement amount; and
a control information output unit configured to output information on the updated path.

(2) A control information generation method for generating control information for controlling a welding device that deposits a layer shape using a bead formed by adding a molten processing material to a processing target surface while moving a processing position along a predetermined path, and deposits a three-dimensional structure in which the layer shapes are deposited, the control information generation method including:

a step of acquiring coordinate information on a plurality of passing points in the path;
a step of assuming a repulsion force applied to adjacent passing points among the passing points, and obtaining, for the plurality of passing points, a movement amount of the passing point moving from a position before the repulsion force is applied to a position where the passing point is in dynamic equilibrium due to the repulsion force;
a step of updating the path by correcting coordinates of the plurality of passing points according to the movement amount; and
a step of outputting information on the updated path.

(3) A program for causing a computer to execute a control information generation procedure of generating control information for controlling a welding device that deposits a layer shape using a bead formed by adding a molten processing material to a processing target surface while moving a processing position along a predetermined path, and deposits a three-dimensional structure in which the layer shapes are deposited, the program causing the computer to execute

a procedure of acquiring coordinate information on a plurality of passing points in the path;
a procedure of assuming a repulsion force applied to adjacent passing points among the passing points, and obtaining, for the plurality of passing points, a movement amount of the passing point moving from a position before the repulsion force is applied to a position where the passing point is in dynamic equilibrium due to the repulsion force;
a step of updating the path by correcting coordinates of the plurality of passing points according to the movement amount; and
a procedure of outputting information on the updated path.

(4) A welding control device including:

the control information generation device according to (1); and
a control unit configured to execute arc welding in accordance with a result output from the control information generation device.

(5) A welding device including:

the welding control device according to (4); and
a welding robot configured to perform arc welding.

ADVANTAGEOUS EFFECTS OF INVENTION

According to the present invention, stable bead formation can be achieved by making an arrangement of paths uniform without executing complicated control.

BRIEF DESCRIPTION OF DRAWINGS

Fig. 1 is an overall configuration diagram of a welding device.
Fig. 2 is a schematic functional block diagram of a control information generation device.
Fig. 3 is a block diagram showing a hardware configuration of the control information generation device.

Fig. 4A is a schematic diagram showing beads formed along a path formed by a depositing plan.

Fig. 4B is a schematic diagram showing beads formed by changing the path of the bead shown in Fig. 4A.

Fig. 5A is a diagram showing a step-by-step procedure of equalizing intervals between paths.

Fig. 5B is a diagram showing a step-by-step procedure of equalizing the intervals between the paths.

Fig. 5C is a diagram showing a step-by-step procedure of equalizing the intervals between the paths.

Fig. 5D is a diagram showing a step-by-step procedure of equalizing the intervals between the paths.

Fig. 6 is a flowchart showing a procedure of updating a trajectory plan.

Fig. 7A is a schematic diagram showing a state until adjacent paths are evenly arranged step-by-step.

Fig. 7B is a schematic diagram showing a state until the adjacent paths are evenly arranged step-by-step.

Fig. 7C is a schematic diagram showing a state until the adjacent paths are evenly arranged step-by-step.

Fig. 8 is a graph schematically showing a change in a movement distance of a path over time.

Fig. 9 is a schematic diagram when a mathematical model is applied to each path.

Fig. 10A is a diagram showing a part of a path before update.

Fig. 10B is a diagram showing a state after the path shown in Fig. 10A is updated.

Fig. 11A is a diagram showing another part of a path before update.

Fig. 11B is a diagram showing a state after the path shown in Fig. 11A is updated.

Fig. 12 is a reference diagram showing a state in which a passing point on a path moves due to a repulsion force.

Fig. 13 is a diagram showing a state in which a passing point on the path moves due to a repulsion force while being constrained two-dimensionally.

Fig. 14A is a diagram showing a state in which a new path is added according to a movement amount of a path.

Fig. 14B is a diagram showing a state in which a new path is added according to the movement amount of the path.

DESCRIPTION OF EMBODIMENTS

Hereinafter, a configuration example of the present invention will be described in detail with reference to the drawings. Here, an example in which a control information generation device according to the present invention is applied to additive manufacturing in which beads obtained by melting and solidifying a filler material are deposited to deposit a three-dimensional deposited object is described. However, the present invention can also be applied to general welding such as fillet welding and butt welding.

The control information generation device generates a control signal for manufacturing a welded structure in a welding device including welding equipment such as a welding robot and a welding power supply.

First, a configuration of the welding device will be described.

<Welding Device>

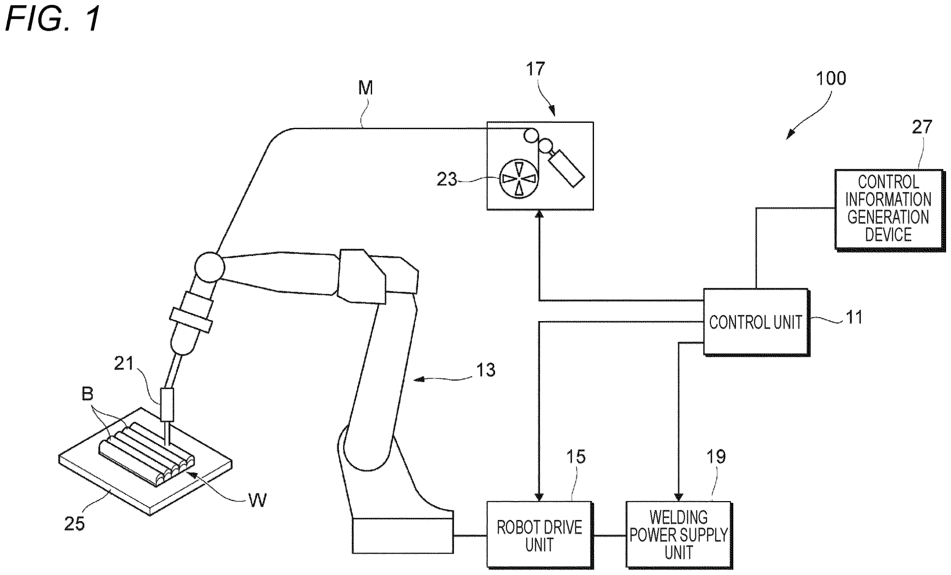

Fig. 1 is an overall configuration diagram of the welding device.

A welding device 100 includes a control unit 11, a welding robot 13, a robot drive unit 15, a filler material supply unit 17, and a welding power supply unit 19, which are connected to the control unit 11.

The welding robot 13 is an articulated robot, and a welding torch 21 is attached to a tip end shaft thereof. The robot drive unit 15 outputs a command to drive the welding robot 13, and freely sets a position and posture of the welding torch 21 three-dimensionally within a range of degrees of freedom of a robot arm. A filler material (welding wire) M that is continuously supplied is supported at a tip end of the welding torch 21.

The welding torch 21 includes a shield nozzle (not shown), and is a torch for gas metal arc welding to which shielding gas is supplied from the shield nozzle. An arc welding method may be a consumable electrode type such as shielded arc welding or carbon dioxide gas arc welding, a non-consumable electrode type such as TIG welding or plasma arc welding, and is appropriately selected according to a deposited object (welded structure) to be manufactured. For example, in the case of the consumable electrode type, a contact tip is disposed inside the shield nozzle, and the filler material M to which a melting current is supplied is held by the contact tip. The welding torch 21 generates an arc from a tip end of the filler material M in a shielding gas atmosphere while holding the filler material M.

The filler material supply unit 17 includes a reel 23 around which the filler material M is wound. The filler material M is sent from the filler material supply unit 17 to a feeding mechanism (not shown) attached to the robot arm or the like, and is sent to the welding torch 21 while being fed in a forward direction and a reverse direction by the feeding mechanism as necessary.

Any commercially available welding wire can be used as the filler material M. For example, a welding wire specified by solid wires for MAG and MIG welding of mild steel, high strength steel and low temperature service steel (JIS Z 3312), flux cored wires for gas shielded and self-shielded metal arc welding of mild steel, high strength steel and low temperature service steel (JIS Z 3313), or the like can be used. Further, it is also possible to use the filler material M such as aluminum, an aluminum alloy, nickel, or a nickel-based alloy in accordance with desired properties.

The welding power supply unit 19 supplies a welding current and a welding voltage for generating an arc from the tip end of the torch to the welding torch 21.

According to the welding device 100 configured as described above, a depositing program corresponding to a deposited object to be manufactured is transmitted from the control unit 11 to the robot drive unit 15. The depositing program includes a large number of command codes, and is created based on an appropriate algorithm according to various conditions such as shape data (CAD data and the like), a material, and a heat input amount of the deposited object.

The robot drive unit 15 executes the received depositing program, drives the welding robot 13, the filler material supply unit 17, the welding power supply unit 19, and the like, and forms a bead B according to the depositing program. That is, the robot drive unit 15 drives the welding robot 13 to move the welding torch 21 along a trajectory (path) of the welding torch 21 set in the depositing program. At the same time, the filler material supply unit 17 and the welding power supply unit 19 are driven according to a set welding condition, and the filler material M at the tip end of the welding torch 21 is melted and solidified by the arc. Accordingly, the bead B is formed on a base plate 25 along the trajectory of the welding torch 21. For example, the beads B are adjacent to each other to form a bead layer including a plurality of beads B. By depositing a bead layer of a next layer on the bead layer, a deposited object W having a desired three-dimensional shape is deposited.

The control unit 11 has a function of comprehensively controlling each unit such as the robot drive unit 15, the filler material supply unit 17, and the welding power supply unit 19. A control information generation device 27 is connected to the control unit 11, and various kinds of control information for performing additive manufacturing (or various kinds of welding) are input. The control unit 11 determines a path indicating an order of formation of the bead B for depositing the deposited object according to an input depositing target, a depositing condition, and the like, and generates the depositing program described above.

<Control Information Generation Device>

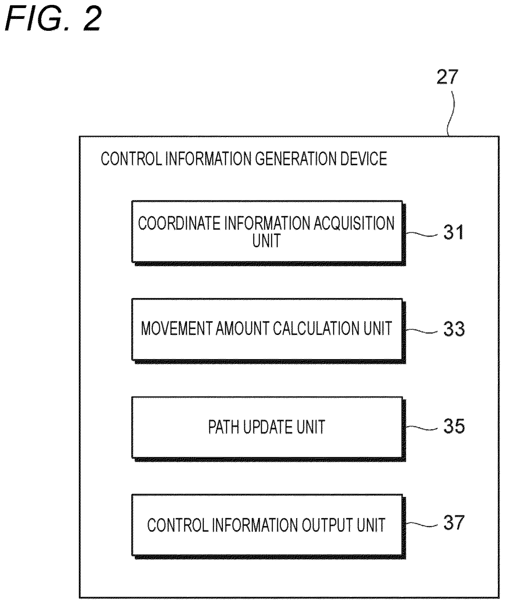

Fig. 2 is a schematic functional block diagram of the control information generation device 27.

When depositing a deposited object by stacking a plurality of beads formed by melting and solidifying the filler material M in a layered manner by the welding device 100, the control information generation device 27 corrects, as necessary, the depositing program for driving each unit of the welding device 100 based on a predetermined depositing plan. For example, when a bead is formed according to the predetermined depositing plan, it is possible to prevent bead heights from becoming uneven or to prevent a non-welded portion (defect) from occurring inside the bead by changing or adjusting the depositing plan. The control information generation device 27 generates control information for updating such a depositing plan and outputs the control information to the control unit 11. The control information generation device 27 includes a coordinate information acquisition unit 31, a movement amount calculation unit 33, a path update unit 35, and a control information output unit 37 to be described later in detail.

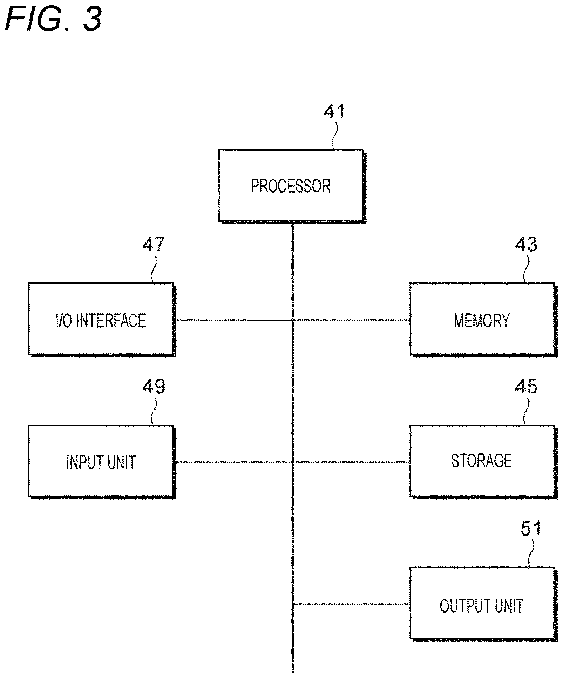

Fig. 3 is a block diagram showing a hardware configuration of the control information generation device 27.

The control information generation device 27 is implemented by a computer device including a processor 41 such as a CPU or an MPU, a memory 43 such as a ROM or a RAM, a storage 45 such as a hard disk drive (HD) and a solid-state drive (SSD), an I/O interface 47 connected to an external device, an input unit 49, an output unit 51, and the like. Each element of the control information generation device 27 described above operates according to a program, which is a command of the processor 41, and performs a function. The control information generation device 27 may be disposed away from the welding device 100 and may be connected to the welding device 100 from a remote place via a communication unit such as a network.

<Outline of Procedure of Updating Depositing Trajectory>

Next, an outline of a procedure of updating a path of a predetermined depositing plan will be described.

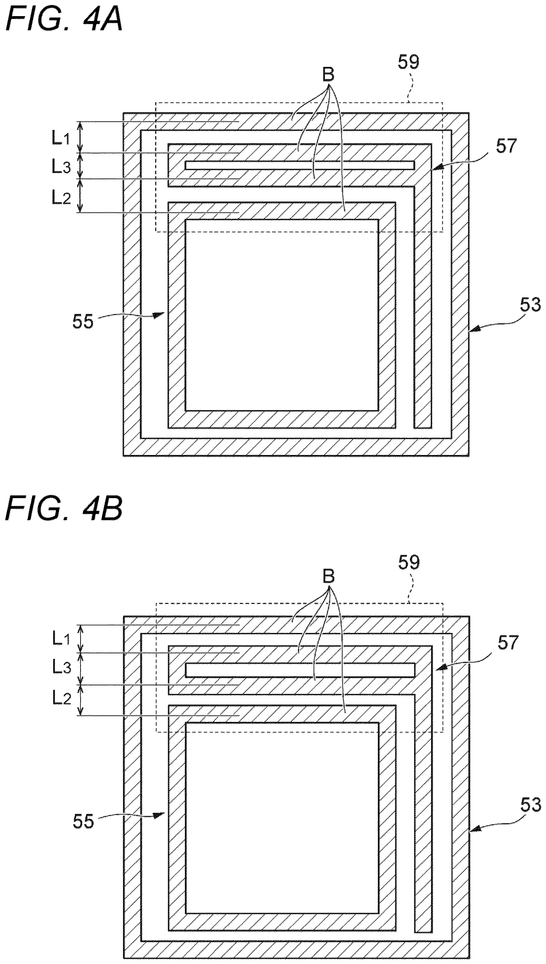

Fig. 4A is a schematic diagram showing beads formed along a path (depositing trajectory set by the depositing program) created by the depositing plan. Fig. 4B is a schematic diagram of beads formed by changing the path shown in Fig. 4A.

The bead B shown in Fig. 4A includes an outer wall portion 53 formed by surrounding an outer side in a rectangular shape, a rectangular inner wall portion 55 formed inside the outer wall portion 53, and a filling portion 57 formed between the outer wall portion 53 and the inner wall portion 55 and filled with beads.

Among the beads B, in a parallel portion 59 in which beads in the outer wall portion 53, the filling portion 57, and the inner wall portion 55 are arranged in parallel, intervals between paths (an interval between the beads B) are uneven. That is, when a distance between the bead B in the outer wall portion 53 and the bead in the outer side of the filling portion 57 is L 1, a distance between the bead B in the inner wall portion 55 and the bead in an inner side of the filling portion 57 is L2, and a distance between the beads B in the filling portion 57 is L3, L1 > L3 and L2 > L3.

In this case, in the parallel portion 59, since an interval between rows of beads B in the filling portion 57 is narrower than other portions, a narrow portion easily occurs between the beads. Since a molten metal is less likely to flow in the narrow portion, the narrow portion is less likely to be filled with the molten metal when forming beads, and a cavity (defect) is likely to occur.

On the other hand, as shown in Fig. 4B, after the path is changed, the beads B in the outer wall portion 53, the filling portion 57, and the inner wall portion 55 are arranged at equal distances in the parallel portion 59 (L1 ≈ L2 ≈ L3). Accordingly, since the narrow portion is less likely to occur, a high-quality deposited object having no defect can be formed.

Thus, arranging a plurality of paths at equal intervals without placing the paths too close together is effective in improving quality of the deposited object. Four rows of beads B are formed in the parallel portion 59 shown here, and therefore, four paths for forming the bead B are present in the depositing plan.

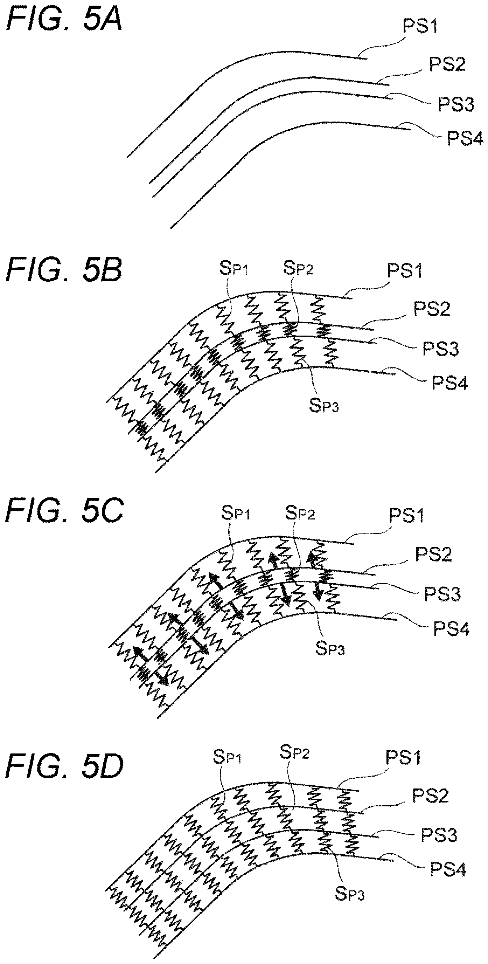

Figs. 5A to 5D are diagrams showing step-by-step procedures of equalizing intervals between paths.

As shown in Fig. 5A, four paths PS1, PS2, PS3, and PS4 are assumed to be uneven paths as in the case of the bead in the parallel portion 59 described above. A distance between the path PS2 and the path PS3 is smaller than a distance between the path PS1 and the path PS2 and a distance between the path PS3 and the path PS4.

Therefore, as shown in Fig. 5B, elastically expanding and contracting springs Sp1, Sp2, and Sp3 are virtually provided between the four paths PS1, PS2, PS3, and PS4. That is, the spring Sp1 is provided between the path PS1 and the path PS2, the spring Sp2 is provided between the path PS2 and the path PS3, and the spring Sp3 is provided between the path PS3 and the path PS4. All spring constants of the springs are the same. As a constraint condition, positions of the path PS1 and the path PS4 are fixed so that a shape of the deposited object does not change.

Then, as shown in Fig. 5C, due to an elastic repulsion force of the spring Sp2 between the path PS2 and the path PS3 having a narrow interval, the path PS2 is pushed back to a path PS1 side, and the path PS3 is pushed back to a path PS4 side. Accordingly, as shown in Fig. 5D, the paths PS2 and PS3 are moved to positions where the springs Sp1, Sp2, and Sp3 are dynamically balanced. In this way, the paths PS1, PS2, PS3, and PS4 are arranged with uniform intervals.

When the beads are formed along the paths PS1 to PS4 obtained as described above, there is no excessively close path, occurrence of unevenness (narrow portions) on a surface to be deposited is prevented, and a deposited object with fewer defects can be obtained.

<Details of Procedure of Updating Trajectory Plan>

Next, a specific procedure of updating the trajectory plan in which a plurality of paths are set in the depositing plan will be described.

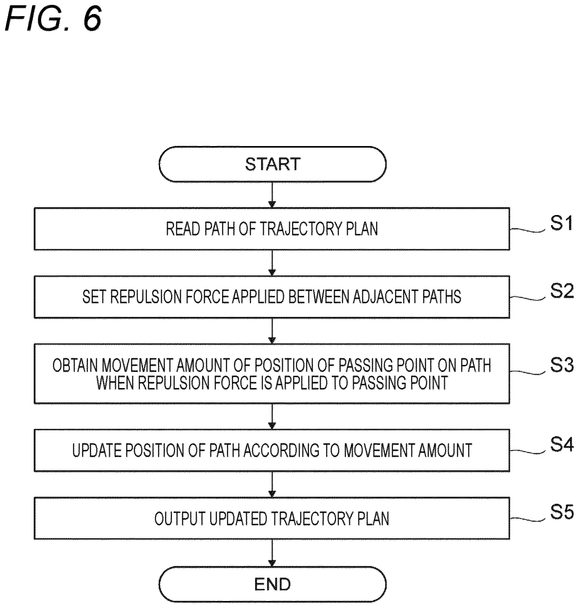

Fig. 6 is a flowchart showing a procedure of updating the trajectory plan. Hereinafter, the procedure of updating the trajectory plan will be described based on the flowchart in Fig. 6.

First, the coordinate information acquisition unit 31 shown in Fig. 2 reads information on a path representing a movement trajectory of the welding torch from the depositing program representing a depositing plan for manufacturing a desired deposited object (S1). The trajectory plan for determining the path may be created by a known method, and for example, by allocating a path that is to be a movement trajectory of the welding torch to a shape model in a layer shape obtained by slicing a target depositing shape. The path may be a path generated and recorded in advance. As the information on the path to be read, for example, in addition to coordinate information in the path, there may be a pitch between adjacent paths and an interval (height) between shape models in a layer shape to be deposited.

According to the read information on each path, a repulsion force applied between adjacent paths is set (S2). The repulsion force corresponds to providing the above-described springs Sp1, Sp2, Sp3.

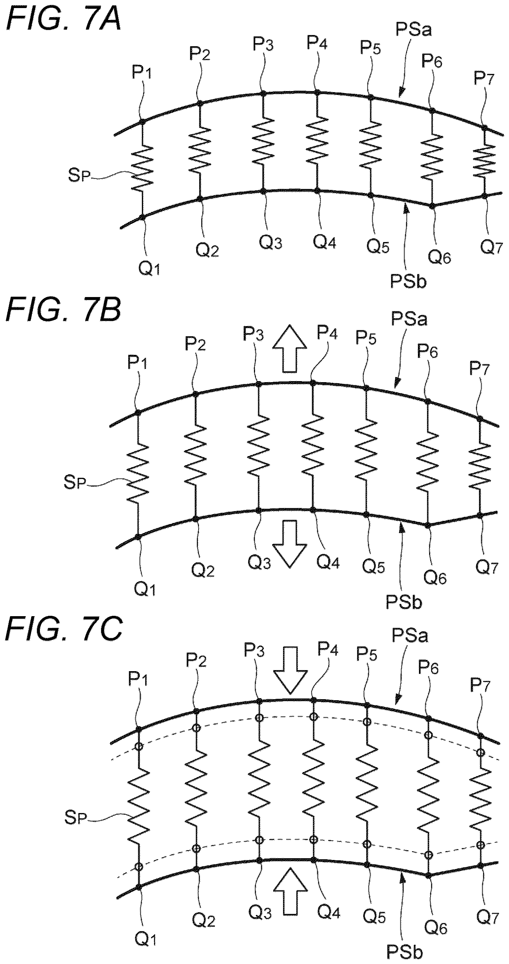

Figs. 7A to 7C are schematic diagrams showing states until adjacent paths are evenly arranged step-by-step.

Fig. 7A shows a pair of paths PSa and PSb adjacent to each other. The paths PSa and PSb are represented by lines connecting passing points Pi and Qj representing movement target positions of the welding torch. A repulsion force is virtually applied to the passing point Pi on the path PSa and the passing point Qj on the path PSb. The repulsion force is illustrated by an elastic restoring force of a spring, but the present invention is not limited thereto. For example, another dynamic model such as a Coulomb force, a magnetic force, or a pressure may be used.

When a spring is used as a source of the repulsion force, a spring Sp is disposed between the passing points Pi and Qj (i, j = 1 to 7) here. That is, it is assumed that springs are provided between the passing point P1 and the passing point Q1, between the passing point P2 and the passing point Q2, and the like. The spring Sp generates a repulsion force corresponding to a distance between the path PSa and the path PSb, specifically, a distance between the passing point Pi and the passing point Qj on the paths.

As shown in Fig. 7B, when a repulsion force acts on the passing points Pi and Qj, the paths PSa and PSb move away from each other. This repulsion force decreases because the spring elongates along with the movement of the paths PSa and PSb and reaches a dynamically equilibrium state.

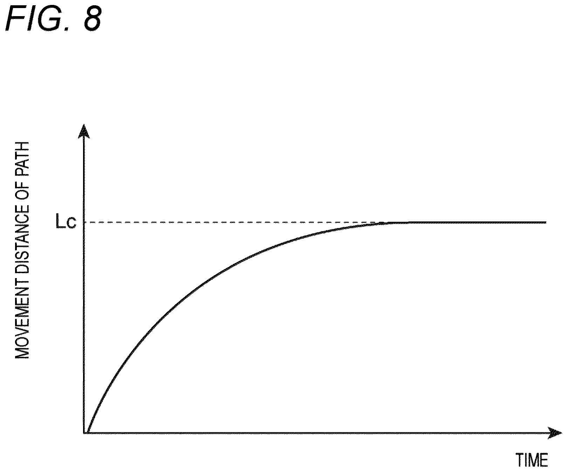

Fig. 8 is a graph schematically showing a change in a movement distance of a path over time.

The paths PSa and PSb move by receiving a repulsion force, and a movement distance converges to a certain distance Lc. As a result, as shown in Fig. 7C, the paths PSa and PSb stop moving in the equilibrium state. The positions are disposition positions of the equalized paths described above. More specifically, movement of the passing point is reduced by a damping force for lowering a movement speed of the path, and a state is brought into an equilibrium state.

Here, the above-described repulsion force will be described in more detail.

Formulas (1) to (3) are given as an example of a mathematical model of repulsion force. When a passing point on the path PSa is Pi and a passing point on the path PSb is Qj, a repulsion force Fi acting on an i-th passing point is obtained by the formulas (1) to (3).

[Formula 1]

$$F_i = \sum_{j=1}^{n} g_{ij} \frac{x_j - x_i}{|x_j - x_i|} \qquad (1)$$

$$g_{ij} = \begin{cases} k\delta_{ij} , & \delta_{ij} < 0 \\ 0 , & \delta_{ij} \geq 0 \end{cases} \qquad (2)$$

$$\delta_{ij} = |x_j - x_i| - S_0 \qquad (3)$$

Here, k is a constant, xi is a coordinate of the passing point Pi on the path PSa, xj is a coordinate of the passing point Qj on the path PSb. The coordinates shown here are coordinates in one axis direction, but may be two-dimensional plane coordinates or three-dimensional spatial coordinates. $S_0$ is a limit distance at which a repulsion force F has an effect, and when a distance between the passing points is $S_0$ or more, it is considered that the repulsion force F has no effect from that separated position. That is, the repulsion force Fi acting on the i-th passing point Pi is a sum of elastic forces from the springs Sp between the passing point Qj and the passing point Pi in a region closer than the distance $S_0$.

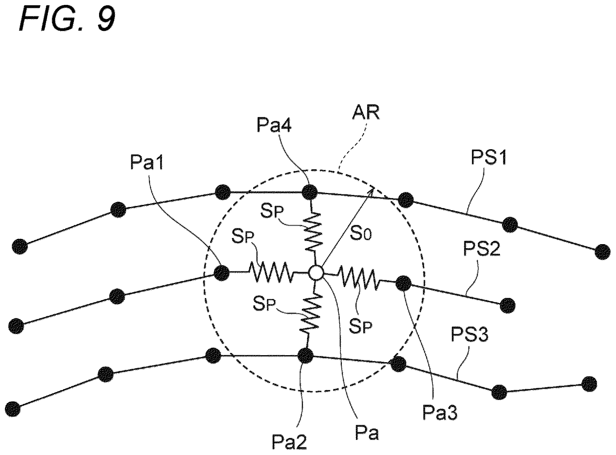

Fig. 9 is a schematic diagram when the mathematical model is applied to the paths PS1 to PS3.

The repulsion force F acting on a passing point Pa of the intermediate path PS2 is obtained based on the above formulas (1) to (3). That is, when a distance between the passing point Pa and another passing point is considered in two dimensions, a repulsion force is generated at the passing point Pa corresponding to a distance between the passing point Pa and the other passing points Pa1, Pa2, Pa3, and Pa4 that are present in a range AR having a radius of the distance $S_0$ centered on the passing point Pa.

Further, a force for converging (attenuating a movement speed) movement of the passing point caused by the repulsion force may be assumed. This force is a force proportional to the movement speed of the passing point when a repulsion force acts on the passing point of the path.

[Formula 2]

$$\overline{u_{t+\Delta t}} = \overline{u_t} + \Delta t(\overline{F} - c\overline{u_t}) \qquad (4)$$

$$\overline{x_{t+\Delta t}} = \overline{x_t} + \Delta t\overline{u_{t+\Delta t}} \qquad (5)$$

Here, the vector u is a velocity vector of each passing point, the vector x is a position vector of each passing point, t is a time, $\Delta t$ is a time change amount, the vector F is a matrix of the repulsion force, and c is a damping coefficient. For details of the above calculation, refer to JP2015-230530A as appropriate.

The term of the damping coefficient c in the formula (4) is a term that attenuates the movement speed of the passing point due to the repulsion force F, and stops the movement of the paths PSa and PSb in Fig. 7C. Accordingly, an amount of positional variation converges over time. This convergence may be, for example, stopping update of the movement amount when the movement amount of the passing point falls below a predetermined value. Calculation of the movement amount may be repeated a plurality of times. In this case, it is possible to extract a plurality of candidates for a correction position for resolving a densely packed path.

As described above, positions of the paths forming a contour of a layer are fixed. Thus, by setting the position of only the path disposed inside the contour, it is possible to evenly dispose paths inside the contour without changing a shape of the contour.

As described above, the repulsion force applied to adjacent passing points among the plurality of passing points is set, and when the set repulsion force is applied to each passing point, the movement amount of the passing point moving from a position before the repulsion force is applied to a position where the passing point is in dynamic equilibrium after the repulsion force is applied is obtained by the calculation for the plurality of passing points (S3). The processing is performed by the movement amount calculation unit 33 shown in Fig. 2.

Next, the path update unit 35 updates the position of the path according to the obtained movement amount (S4).

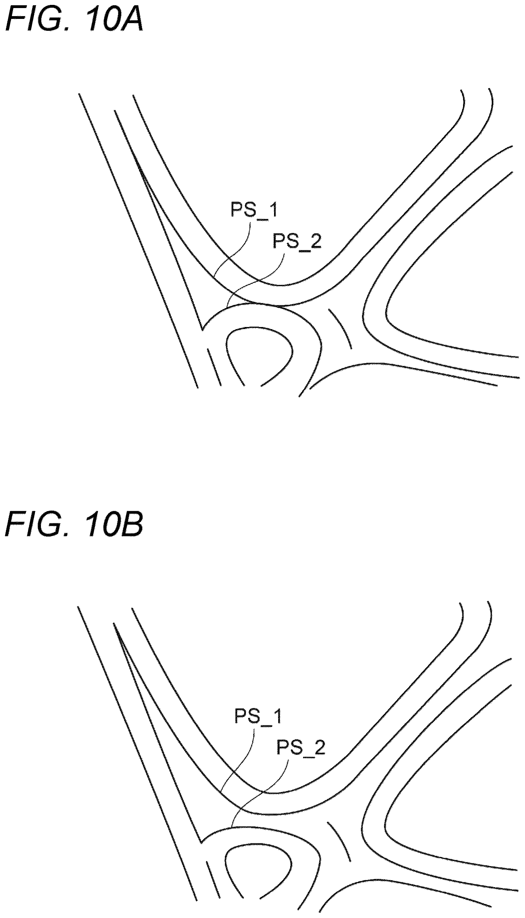

Fig. 10A is a diagram showing a part of a path before update. Fig. 10B is a diagram showing a state after the path shown in Fig. 10A is updated.

In Fig. 10A, adjacent paths PS_1 and PS_2 are close to each other, but in Fig. 10B after the update, the paths PS_1 and PS_2 are separated, and intervals between the paths are uniform.

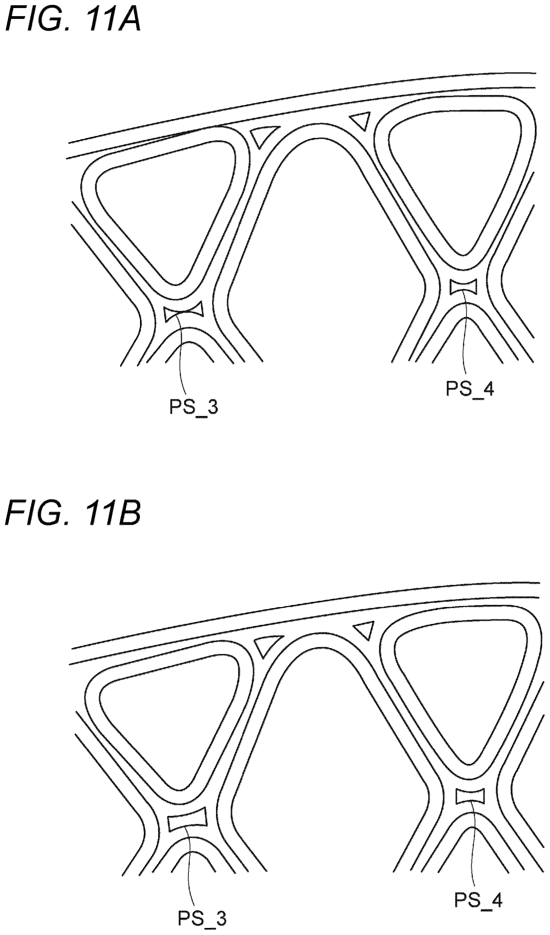

Fig. 11A is a diagram showing another part of a path before update. Fig. 11B is a diagram showing a state after the path shown in Fig. 11A is updated.

In Fig. 11A, a path PS_3 is bent to create portions in contact with each other, and in a path PS_4, parts are disposed close to each other in a narrow region. However, the path PS_3 after the update shown in Fig. 11B does not come into contact with each other, and the portions of the path PS_4 close to each other are resolved. Thus, the intervals between the paths are uniform throughout.

The control information output unit 37 outputs the information on the trajectory plan in which the path is updated as described above to the control unit 11 or the like shown in Fig. 1 (S5). The control unit 11 corrects the depositing plan based on the updated information on the trajectory plan. For example, when a bead to be formed next during depositing or a deposited object to be deposited next time is formed, a bead is formed based on the trajectory plan after the update.

As described above, according to the control information generation device 27 having the present configuration, a dynamic equilibrium state can be analytically obtained from a pseudo-application such as a repulsion force on a comparatively dense path among paths with created trajectory plan, and the trajectory plan can be corrected so that a position in an equilibrium state becomes a position of the path. This correction can be performed regardless of conditions such as a shape of a target deposited object and a direction of a trajectory. When beads are formed based on the corrected trajectory plan, a narrow portion is less likely to occur between the beads, and occurrence of defects can be reduced. In addition, in this case, it is not necessary to change the welding condition, and complication of control can be prevented.

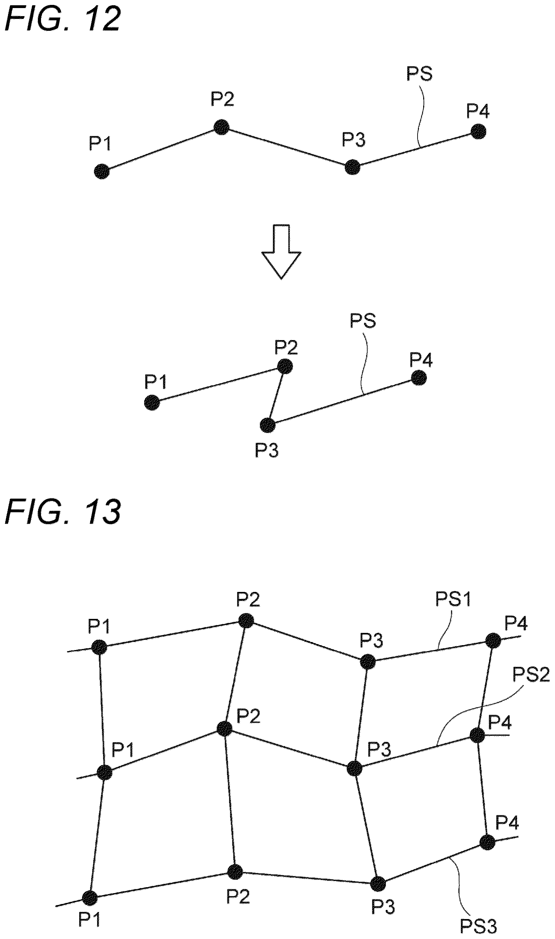

Fig. 12 is a reference diagram showing a state in which the passing point on a path moves due to a repulsion force. Fig. 13 is a diagram showing a state in which the passing point on the path moves due to a repulsion force while being constrained two-dimensionally.

Each of the passing points P1 to P4 on a path PS shown in Fig. 12 moves only due to a repulsion force with another adjacent path (not shown). In this case, depending on a situation of the other path, the passing point P3 may be closer to the passing point P2 when viewed from the passing point P1. In this case, a degree of bending of the path PS is increased, and a narrow portion is likely to be formed when a bead is formed. As a result, a defect easily occurs in a deposited object.

On the other hand, as shown in Fig. 13, when a repulsion force is applied to each of the passing points P1 to P4 on the paths PS1 to PS3 from a passing point on an adjacent path and another passing point on the same path as described above, movement of the passing points P1 to P4 is constrained two-dimensionally, and a phenomenon in which positions of the passing points are reversed as shown in Fig. 12 is less likely to occur. Therefore, a narrow portion is less likely to occur when forming beads, and a defect is less likely to occur in a deposited object.

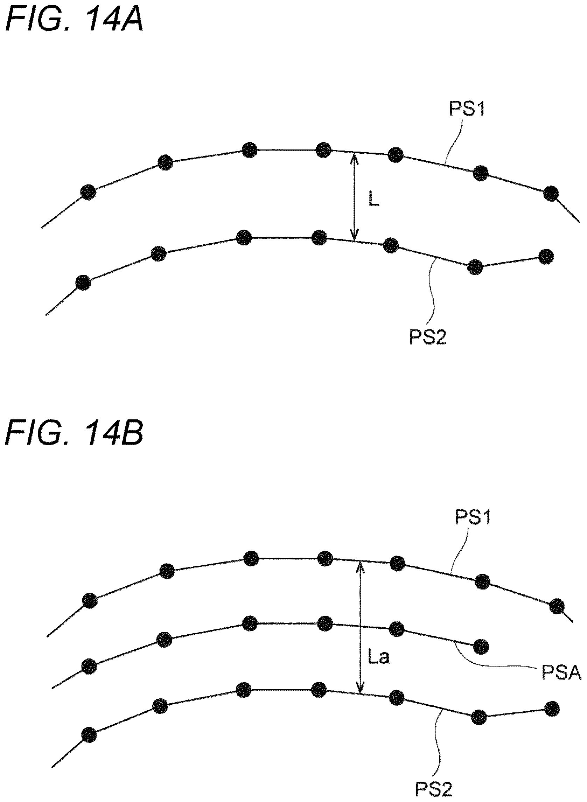

Figs. 14A and 14B are diagrams showing a state in which a new path is added according to a movement amount of a path.

When the pair of paths PS 1 and PS2 disposed apart from each other by a distance L shown in Fig. 14A moves by applying a repulsion force to passing points as described above, depending on a condition, a distance La between the path PS1 and the path PS2 may be larger than a predetermined reference width as shown in Fig. 14B. In this case, a new path PSA may be added between the path PS1 and the path PS2, preferably at a position with an equal distance from the path PS1 and the path PS2.

Thus, when an interval between the adjacent paths is larger than the predetermined reference width, the interval between the paths can be optimized by newly generating the additional path between the adj acent paths.

The present invention is not limited to the above-described embodiment, and combinations of the configurations of the embodiment and changes and applications made by those skilled in the art based on the description of the specification and well-known techniques are also intended for the present invention and are included in the scope of protection.

As described above, the following matters are disclosed in the present specification.

(1) A control information generation device for generating control information for controlling a welding device that deposits a layer shape using a bead formed by adding a molten processing material to a processing target surface while moving a processing position along a predetermined path, and deposits a three-dimensional structure in which the layer shapes are deposited, the control information generation device including:

a coordinate information acquisition unit configured to acquire coordinate information on a plurality of passing points in the path;
a movement amount calculation unit configured to set a repulsion force applied to adjacent passing points among the plurality of passing points, and obtain, when the set repulsion force is applied to the passing point, a movement amount of the passing point from a position before the repulsion force is applied to a position where the passing point is in dynamic equilibrium by calculation for the plurality of passing points;
a path update unit configured to update the path by correcting coordinates of the plurality of passing points according to the movement amount; and
a control information output unit configured to output information on the updated path.

According to the control information generation device, when the repulsion force is applied between adjacent passing points, intervals between the passing points can be made uniform by using the movement of the passing point to a position at which the passing point is in dynamic equilibrium. Accordingly, when the bead is formed along the path, a narrow portion is less likely to occur, and occurrence of defects is reduced. Since there is no need to change a welding condition, control is not complicated.

(2) The control information generation device according to (1), in which
the adjacent passing points include at least passing points other than passing points adjacent to each other along the path.

According to this control information generation device, the interval between adjacent paths can be widened, and the path can be updated to a path in which a defect is less likely to occur.

(3) The control information generation device according to (1), in which
the movement amount calculation unit repeats processing of obtaining a movement speed of the passing point when the repulsion force is applied to the passing point and calculating the movement amount corresponding to the obtained movement speed.

According to the control information generation device, the movement amount of the passing point according to the movement speed of the passing point due to the repulsion force is obtained.

(4) The control information generation device according to (3), in which
the movement amount calculation unit sets a damping force that reduces a movement speed of the passing point due to the repulsion force, and calculates the movement amount when the set damping force is further applied to the passing point.

According to the control information generation device, a distance from an initial position of the passing point to a position where the movement of the passing point is prevented by the damping force to reach an equilibrium state after the passing point moves due to the applied repulsion force is set as the movement amount.

(5) The control information generation device according to any one of (1) to (4), in which
when an interval between adjacent paths is larger than a predetermined reference width, the path is newly added between the adjacent paths.

According to the control information generation device, widening between paths can be prevented from becoming excessively large by adding a new path.

(6) The control information generation device according to (5), in which
when the repulsion force is applied to a passing point in the added path, a movement amount of the passing point from a position before the repulsion force is applied to a position where the passing point is in dynamic equilibrium is obtained by calculation for the plurality of passing points.

According to the control information generation device, by applying a repulsion force to a group of passing points in the added path and moving the passing points to positions where the passing points are in equilibrium, distances between the passing points can be made uniform.

(7) A control information generation method for generating control information for controlling a welding device that deposits a layer shape using a bead formed by adding a molten processing material to a processing target surface while moving a processing position along a predetermined path, and deposits a three-dimensional structure in which the layer shapes are deposited, the control information generation method including:

a step of acquiring coordinate information on a plurality of passing points in the path;
a step of assuming a repulsion force applied to adjacent passing points among the passing points, and obtaining, for the plurality of passing points, a movement amount of the passing point moving from a position before the repulsion force is applied to a position where the passing point is in dynamic equilibrium due to the repulsion force;

a step of updating the path by correcting coordinates of the plurality of passing points according to the movement amount; and

a step of outputting information on the updated path.

According to the control information generation method, when the repulsion force is applied between adjacent passing points, intervals between the passing points can be made uniform by using the movement of the passing point to a position at which the passing point is in dynamic equilibrium. Accordingly, when the bead is formed along the path, a narrow portion is less likely to occur, and occurrence of defects is reduced. Since there is no need to change a welding condition, control is not complicated.

(8) A program for causing a computer to execute a control information generation procedure of generating control information for controlling a welding device that deposits a layer shape using a bead formed by adding a molten processing material to a processing target surface while moving a processing position along a predetermined path, and deposits a three-dimensional structure in which the layer shapes are deposited, the program causing the computer to execute

a procedure of acquiring coordinate information on a plurality of passing points in the path;

a procedure of assuming a repulsion force applied to adjacent passing points among the passing points, and obtaining, for the plurality of passing points, a movement amount of the passing point moving from a position before the repulsion force is applied to a position where the passing point is in dynamic equilibrium due to the repulsion force;

a step of updating the path by correcting coordinates of the plurality of passing points according to the movement amount; and

a procedure of outputting information on the updated path.

According to the program, when the repulsion force is applied between adjacent passing points, intervals between the passing points can be made uniform by using the movement of the passing point to a position at which the passing point is in dynamic equilibrium. Accordingly, when the bead is formed along the path, a narrow portion is less likely to occur, and occurrence of defects is reduced. Since there is no need to change the welding condition, control is not complicated.

(9) A welding control device including:

the control information generation device according to any one of (1) to (6); and

a control unit configured to execute arc welding in accordance with a result output from the control information generation device.

According to the welding control device, it is possible to easily set an arc welding procedure in which a defect is less likely to occur.

(10) A welding device including:

the welding control device according to (9); and

a welding robot configured to perform arc welding.

According to the welding device, arc welding can be performed in which a defect is less likely to occur.

The present application is based on Japanese Patent Application No. 2022-016344 filed on February 4, 2022, the contents of which are incorporated herein by reference.

REFERENCE SIGNS LIST

11 control unit
13 welding robot
15 robot drive unit
17 filler material supply unit
19 welding power supply unit
21 welding torch
23 reel
25 base plate

27 control information generation device
31 coordinate information acquisition unit
33 movement amount calculation unit
35 path update unit
37 control information output unit
41 processor
43 memory
45 storage
47 I/O interface
49 input unit
51 output unit
53 outer wall portion
55 inner wall portion
57 filling portion
59 parallel portion
100 welding device
M filler material
W deposited object

**Claims**

1. A control information generation device for generating control information for controlling a welding device that deposits a layer shape using a bead formed by adding a molten processing material to a processing target surface while moving a processing position along a predetermined path, and deposits a three-dimensional structure in which the layer shapes are deposited, the control information generation device comprising:

   a coordinate information acquisition unit configured to acquire coordinate information on a plurality of passing points in the path;
   a movement amount calculation unit configured to set a repulsion force applied to adjacent passing points among the plurality of passing points, and obtain, when the set repulsion force is applied to the passing point, a movement amount of the passing point from a position before the repulsion force is applied to a position where the passing point is in dynamic equilibrium by calculation for the plurality of passing points;
   a path update unit configured to update the path by correcting coordinates of the plurality of passing points according to the movement amount; and
   a control information output unit configured to output information on the updated path.

2. The control information generation device according to claim 1, wherein
   the adjacent passing points include at least passing points other than passing points adjacent to each other along the path.

3. The control information generation device according to claim 1, wherein
   the movement amount calculation unit repeats processing of obtaining a movement speed of the passing point when the repulsion force is applied to the passing point and calculating the movement amount corresponding to the obtained movement speed.

4. The control information generation device according to claim 2, wherein
   the movement amount calculation unit repeats processing of obtaining a movement speed of the passing point when the repulsion force is applied to the passing point and calculating the movement amount corresponding to the obtained movement speed.

5. The control information generation device according to claim 3, wherein
   the movement amount calculation unit sets a damping force that reduces a movement speed of the passing point due to the repulsion force, and calculates the movement amount when the set damping force is further applied to the passing point.

6. The control information generation device according to claim 4, wherein
   the movement amount calculation unit sets a damping force that reduces a movement speed of the passing point due to the repulsion force, and calculates the movement amount when the set damping force is further applied to the passing point.

7. The control information generation device according to any one of claims 1 to 6, wherein when an interval between adjacent paths is larger than a predetermined reference width, the path is newly added between the adjacent paths.

8. The control information generation device according to claim 7, wherein when the repulsion force is applied to a passing point in the added path, a movement amount of the passing point from a position before the repulsion force is applied to a position where the passing point is in dynamic equilibrium is obtained by calculation for the plurality of passing points.

9. A control information generation method for generating control information for controlling a welding device that deposits a layer shape using a bead formed by adding a molten processing material to a processing target surface while moving a processing position along a predetermined path, and deposits a three-dimensional structure in which the layer shapes are deposited, the control information generation method comprising:

a step of acquiring coordinate information on a plurality of passing points in the path;
a step of assuming a repulsion force applied to adjacent passing points among the passing points, and obtaining, for the plurality of passing points, a movement amount of the passing point moving from a position before the repulsion force is applied to a position where the passing point is in dynamic equilibrium due to the repulsion force;
a step of updating the path by correcting coordinates of the plurality of passing points according to the movement amount; and
a step of outputting information on the updated path.

10. A program for causing a computer to execute a control information generation procedure of generating control information for controlling a welding device that deposits a layer shape using a bead formed by adding a molten processing material to a processing target surface while moving a processing position along a predetermined path, and deposits a three-dimensional structure in which the layer shapes are deposited, the program causing the computer to execute

a procedure of acquiring coordinate information on a plurality of passing points in the path;
a procedure of assuming a repulsion force applied to adjacent passing points among the passing points, and obtaining, for the plurality of passing points, a movement amount of the passing point moving from a position before the repulsion force is applied to a position where the passing point is in dynamic equilibrium due to the repulsion force;
a procedure of updating the path by correcting coordinates of the plurality of passing points according to the movement amount; and
a procedure of outputting information on the updated path.

11. A welding control device comprising:

the control information generation device according to any one of claims 1 to 6; and
a control unit configured to execute arc welding in accordance with a result output from the control information generation device.

12. A welding control device comprising:

the control information generation device according to claim 7; and
a control unit configured to execute arc welding in accordance with a result output from the control information generation device.

13. A welding control device comprising:

the control information generation device according to claim 8; and
a control unit configured to execute arc welding in accordance with a result output from the control information generation device.

**14.** A welding device comprising:

the welding control device according to claim 11; and
a welding robot configured to perform arc welding.

**15.** A welding device comprising:

the welding control device according to claim 12; and
a welding robot configured to perform arc welding.

**16.** A welding device comprising:

the welding control device according to claim 13; and
a welding robot configured to perform arc welding.

FIG. 1

EP 4 438 220 A1

# FIG. 2

27

CONTROL INFORMATION GENERATION DEVICE

COORDINATE INFORMATION ACQUISITION UNIT — 31

MOVEMENT AMOUNT CALCULATION UNIT — 33

PATH UPDATE UNIT — 35

CONTROL INFORMATION OUTPUT UNIT — 37

# FIG. 3

## FIG. 4A

## FIG. 4B

*FIG. 5A*

PS1
PS2
PS3
PS4

*FIG. 5B*

$S_{P1}$  $S_{P2}$  PS1
PS2
PS3
$S_{P3}$  PS4

*FIG. 5C*

$S_{P1}$  $S_{P2}$  PS1
PS2
PS3
$S_{P3}$  PS4

*FIG. 5D*

$S_{P1}$  $S_{P2}$  PS1
PS2
PS3
PS4
$S_{P3}$

## FIG. 6

```
                    ┌─────────────────┐
                    │      START      │
                    └────────┬────────┘
                             ↓
        ┌────────────────────────────────────────────┐
        │         READ PATH OF TRAJECTORY PLAN        │──── S1
        └────────────────────┬───────────────────────┘
                             ↓
        ┌────────────────────────────────────────────┐
        │  SET REPULSION FORCE APPLIED BETWEEN ADJACENT PATHS  │──── S2
        └────────────────────┬───────────────────────┘
                             ↓
        ┌────────────────────────────────────────────┐
        │ OBTAIN MOVEMENT AMOUNT OF POSITION OF PASSING POINT ON PATH │──── S3
        │  WHEN REPULSION FORCE IS APPLIED TO PASSING POINT  │
        └────────────────────┬───────────────────────┘
                             ↓
        ┌────────────────────────────────────────────┐
        │ UPDATE POSITION OF PATH ACCORDING TO MOVEMENT AMOUNT │──── S4
        └────────────────────┬───────────────────────┘
                             ↓
        ┌────────────────────────────────────────────┐
        │        OUTPUT UPDATED TRAJECTORY PLAN       │──── S5
        └────────────────────┬───────────────────────┘
                             ↓
                    ┌─────────────────┐
                    │       END       │
                    └─────────────────┘
```

*FIG. 7A*

*FIG. 7B*

*FIG. 7C*

FIG. 8

*FIG. 9*

## FIG. 10A

## FIG. 10B

## FIG. 11A

PS_4

PS_3

## FIG. 11B

PS_4

PS_3

FIG. 12

FIG. 13

*FIG. 14A*

PS1

L

PS2

*FIG. 14B*

PS1

La

PSA

PS2

## INTERNATIONAL SEARCH REPORT

| International application No. |
| --- |
| **PCT/JP2022/048295** |

**A. CLASSIFICATION OF SUBJECT MATTER**

*B23K 26/34*(2014.01)i; *B33Y 10/00*(2015.01)i; *B33Y 30/00*(2015.01)i; *B33Y 50/02*(2015.01)i; *B23K 9/032*(2006.01)i; *B23K 9/04*(2006.01)i; *B23K 9/12*(2006.01)i; *B22F 10/00*(2021.01)i; *B22F 10/85*(2021.01)i

FI: B22F10/00; B23K9/04 Z; B23K9/04 G; B23K9/032 Z; B23K9/12 Z; B33Y50/02; B33Y30/00; B33Y10/00; B22F10/85; B23K26/34

According to International Patent Classification (IPC) or to both national classification and IPC

**B. FIELDS SEARCHED**

Minimum documentation searched (classification system followed by classification symbols)

B23K26/34; B33Y10/00; B33Y30/00; B33Y50/02; B23K9/032; B23K9/04; B23K9/12; B22F10/00; B22F10/85

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | WO 2020/250446 A1 (MITSUBISHI ELECTRIC CORP) 17 December 2020 (2020-12-17) entire text, all drawings | 1-16 |
| A | US 2020/0055252 A1 (LEWICKI, James) 20 February 2020 (2020-02-20) entire text, all drawings | 1-16 |
| A | JP 2021-20416 A (KEIWAI LTD) 18 February 2021 (2021-02-18) entire text, all drawings | 1-16 |

☐ Further documents are listed in the continuation of Box C.   ☑ See patent family annex.

\* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
| --- | --- |
| **15 March 2023** | **28 March 2023** |

| Name and mailing address of the ISA/JP | Authorized officer |
| --- | --- |
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

## INTERNATIONAL SEARCH REPORT
### Information on patent family members

International application No.

**PCT/JP2022/048295**

| Patent document cited in search report | | | Publication date (day/month/year) | Patent family member(s) | | | Publication date (day/month/year) |
|---|---|---|---|---|---|---|---|
| WO | 2020/250446 | A1 | 17 December 2020 | US | 2022/0043430 | A1 | |
| | | | | entire text, all drawings | | | |
| | | | | JP | 6647480 | B1 | |
| | | | | CN | 114007802 | A | |
| US | 2020/0055252 | A1 | 20 February 2020 | WO | 2020/041304 | A1 | |
| JP | 2021-20416 | A | 18 February 2021 | (Family: none) | | | |

Form PCT/ISA/210 (patent family annex) (January 2015)

**EP 4 438 220 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6647480 B
- JP 2015230530 A
- JP 2022016344 A